**Europäisches Patentamt**

(19) **European Patent Office**

**Office européen des brevets**

(11) Veröffentlichungsnummer: **0 046 208**
**B1**

(12) ## EUROPÄISCHE PATENTSCHRIFT

(45) Veröffentlichungstag der Patentschrift:
**24.10.84**

(51) Int. Cl.³: **E 06 B 3/54**

(21) Anmeldenummer: **81105780.1**

(22) Anmeldetag: **22.07.81**

(54) Glasscheibe mit einer fest haftenden Überzugsschicht auf dem Randbereich und ihre Verwendung.

(30) Priorität: **16.08.80 DE 3030948**

(43) Veröffentlichungstag der Anmeldung:
**24.02.82 Patentblatt 82/8**

(45) Bekanntmachung des Hinweises auf die Patenterteilung:
**24.10.84 Patentblatt 84/43**

(84) Benannte Vertragsstaaten:
**BE DE FR GB IT**

(56) Entgegenhaltungen:
**DE - C - 911 781**
**US - A - 1 375 914**
**US - A - 2 316 528**

(73) Patentinhaber: **VEGLA Vereinigte Glaswerke GmbH, Viktoria Allee 3-5, D-5100 Aachen (DE)**

(72) Erfinder: **Evers, Manfred, Dr. Dipl.-Phys., Stifterstrasse 15, D-4020 Mettmann (DE)**

(74) Vertreter: **Biermann, Wilhelm, Dr.-Ing., VEGLA Vereinigte Glaswerke GmbH Viktoriaallee 3-5, D-5100 Aachen (DE)**

ACTORUM AG

## Beschreibung

Die Erfindung betrifft eine Glasscheibe, die zur Befestigung eines U-Profil-Abschnitts aus Metall auf dem Randbereich unter Zwischenschaltung eines elastisch nachgiebigen Materialstreifens entlang diesem Randbereich mit einer fest haftenden Überzugsschicht versehen ist, die eine im Vergleich zur Glasoberfläche rauhe Oberfläche aufweist.

Eine Glasscheibe dieser Art ist aus der DE-C 911 781 bekannt. Bei dieser bekannten Glasscheibe dient der elastisch nachgiebige Materialstreifen aus Kautschuk zur Abdichtung gegen eindringendes Wasser, wobei zur Verbesserung der Dichtwirkung die Kautschukdichtung mit der Glasoberfläche verklebt wird. Um eine einwandfreie Verklebung zu ermöglichen, wird die Glasoberfläche mit einer Metallschicht überzogen, und die Metallschicht wird bevorzugt durch Aufspritzen von geschmolzenem Metall hergestellt.

Es ist ebenfalls bekannt, als Beschlagteile dienende U-Profil-Abschnitte aus Metall unter Zwischenschaltung einer elastischen Zwischenschicht auf den Rand einer Glasscheibe aufzupressen, und die Glasoberfläche zur Erhöhung der Haftreibung in dem Randbereich aufzurauhen bzw. mit Vertiefungen zu versehen (US-A 2 316 528).

Der Erfindung liegt die Aufgabe zugrunde, bei einer Glasscheibe, auf die ein U-Profil-Abschnitt aufgepresst werden soll, die Haftreibung in dem Randbereich durch eine Überzugsschicht zu erhöhen, die mit Hilfe eines einfachen Verfahrens ohne die Gefahr einer Beschädigung oder Verletzung der Glasscheibe auf die Oberfläche aufgebracht werden kann. Die Haftreibung soll dabei um ein solches Mass erhöht werden, dass aufgepresste U-Profile auf die Glasscheibe Kräfte übertragen können, wie sie beispielsweise bei absenkbaren Seitenfenstern in Kraftfahrzeugen von dem Absenkmechanismus ausgeübt werden, ohne dass die U-Profile auf die Dauer sich von der Glasscheibe lösen.

Gemäss der Erfindung wird diese Aufgabe dadurch gelöst, dass die Überzugsschicht aus einer bei erhöhten Temperaturen eingebrannten keramischen Einbrennfarbe besteht.

Vorzugsweise ist die Überzugsschicht aus keramischer Einbrennfarbe auf einer Seite der Glasscheibe angeordnet und besteht aus einer Schar von erhabenen Körpern, die punkt- oder streifenförmige Gestalt haben. Diese erhabenen Körper, die durch das Einbrennen in der Glasoberfläche verankert sind, drücken sich in das elastisch nachgiebige Material ein und sorgen so in besonders wirkungsvoller Weise für eine dauerhafte Befestigung des U-Profils.

Die die Überzugsschicht bzw. die erhabenen punkt- oder streifenförmigen Körper bildende keramische Einbrennfarbe wird zweckmässigerweise mit Hilfe des Siebdruckverfahrens in dem gewünschten Muster aufgetragen und bei einer anschliessenden Wärmebehandlung eingebrannt. Wenn solche Glasscheiben aus vorgespanntem Glas bestehen, wie es bei Kraftfahrzeugscheiben in der Regel der Fall ist, erfolgt das Einbrennen der Schicht zweckmässig gleichzeitig mit der für den Vorspannprozess erforderlichen Erwärmung der Glasscheiben.

Ein bevorzugtes Ausführungsbeispiel der Erfindung wird nachfolgend anhand der Zeichnungen näher beschrieben. Von den Zeichnungen zeigt

Fig. 1 einen Querschnitt durch den Randbereich einer erfindungsgemäss eingefassten Glasscheibe, und

Fig. 2 eine erfindungsgemäss ausgebildete Glasscheibe in einer Teilansicht des Randbereichs.

Die Glasscheibe 1 aus thermisch vorgespanntem Silikatglas von etwa 4 mm Dicke soll als versenkbare Seitenscheibe in einem Kraftfahrzeug Verwendung finden, d.h. als «Kurbelscheibe». Zur Übertragung der von dem Hebe- und Absenkmechanismus ausgeübten Kräfte auf die Glasscheibe 1 dient die auf den unteren Randbereich der Glasscheibe 1 unter Zwischenschaltung der elastisch nachgiebigen Zwischenlage 2 aufgepresste, im Querschnitt U-förmige Metallschiene 3. Die Zwischenlage 2 besteht aus Gummi oder aus einem kautschukartigen Material mit ähnlichen Eigenschaften.

In Höhe des von der Metallschiene 3 und der Zwischenlage 2 überdeckten Randbereichs ist die Glasscheibe 1 mit erhabenen streifenförmigen Körpern 4 versehen, die parallel zur Scheibenkante angeordnet sind. Die streifenförmigen Körper 4 haben eine Breite von 0,5 mm bis 2 mm und eine Höhe von etwa 0,2 mm bis 0,3 mm. Sie bestehen aus einer keramischen Einbrennfarbe, die bei einer Temperatur von etwa 600 Grad Celsius im Zuge des Vorspannprozesses in die Glasoberfläche eingebrannt wurde. Der Auftrag der streifenförmigen Körper 4 erfolgte mit Hilfe des Siebdruckverfahrens.

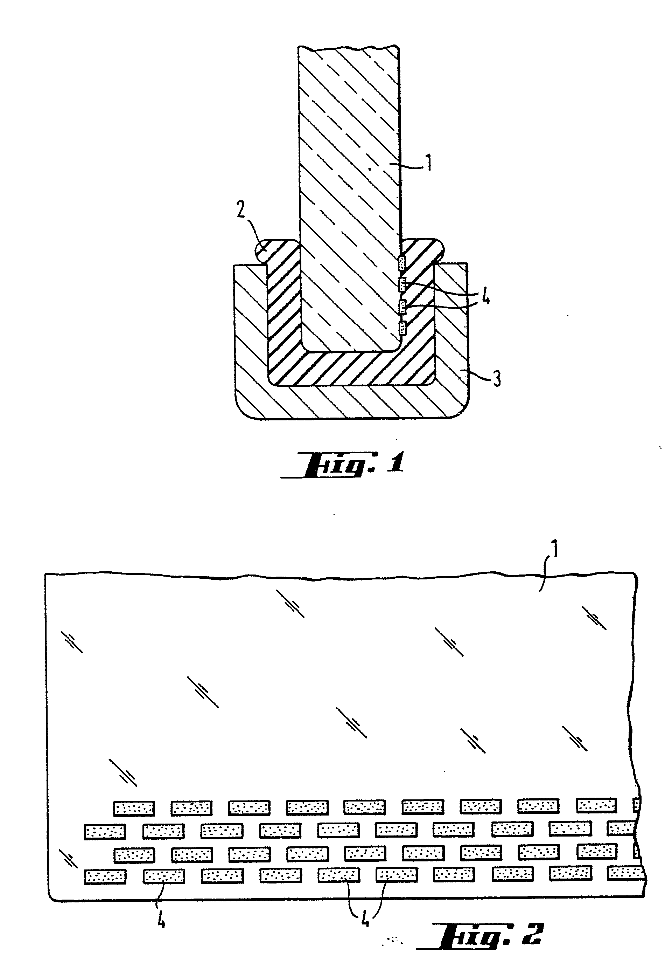

Die Glasscheibe 1 ist in Fig. 2 in der Ansicht dargestellt. Die streifenförmigen Körper 4 sind als kurze geradlinige Erhebungen ausgebildet. Sie können stattdessen auch in Form durchgehender langer linienartiger Erhöhungen ausgebildet sein. Ebenso können anstelle geradliniger Streifen die Erhebungen beliebige geometrische Formen aufweisen, solange ein wesentlicher Teil dieser Erhebungen das Gleiten der Zwischenlage 2 in Richtung des Kraftangriffs verhindert.

Messungen der Abziehkräfte haben ergeben, dass bei der Ausführungsform gemäss Fig. 2 bei einer Abziehgeschwindigkeit der U-förmigen Metallschiene von 2 mm/min die Abziehkräfte um etwa 50% erhöht werden.

## Patentansprüche

1. Glasscheibe, die zur Befestigung eines U-Profil-Abschnitts aus Metall auf dem Randbereich unter Zwischenschaltung eines elastisch nachgiebigen Materialstreifens entlang diesem Randbereich mit einer fest haftenden Überzugsschicht versehen ist, die eine im Vergleich zur Glasoberfläche rauhe Oberfläche aufweist, dadurch gekennzeichnet, dass die Überzugsschicht aus einer bei erhöhten Temperaturen eingebrannten keramischen Einbrennfarbe besteht.

2. Glasscheibe nach Anspruch 1, dadurch gekennzeichnet, dass die Überzugsschicht aus keramischer Einbrennfarbe auf einer Seite der Glasscheibe (1) angeordnet ist und aus einer Schar von erhabenen Körpern (4) besteht.

3. Glasscheibe nach Anspruch 2, dadurch gekennzeichnet, dass die eingebrannten erhabenen Körper (4) punkt- oder streifenförmige Gestalt haben.

4. Glasscheibe nach Anspruch 1 bis 3, dadurch gekennzeichnet, dass die eingebrannten keramischen Körper (4) eine Höhe von bis zu 0,5 mm aufweisen.

5. Glasscheibe nach einem der Ansprüche 1 bis 4, dadurch gekennzeichnet, dass die Überzugsschicht bzw. die erhabenen Körper (4) mit Hilfe des Siebdruckverfahrens auf die Glasscheibe aufgetragen, und bei gebogenen und/oder vorgespannten Glasscheiben im Zuge des Erwärmungsprozesses für den Biege- und/oder den Vorspannvorgang eingebrannt sind.

6. Verwendung einer Glasscheibe nach einem der Ansprüche 1 bis 5 als versenkbare Seitenscheibe für Kraftfahrzeuge.

## Revendications

1. Glace qui, en vue de la fixation d'un segment de profilé en U en métal sur sa zone marginale avec intercalation d'une bande de matière élastiquement déformable, est pourvue, le long de cette zone marginale, d'une couche de revêtement fermement adhérente qui, comparée à la surface du verre, présente une surface rugueuse, caractérisée en ce que la couche de revêtement est constituée d'une peinture à cuire céramique fixée par cuisson à température élevée.

2. Glace suivant la revendication 1, caractérisée en ce que la couche de revêtement en peinture à cuire céramique est disposée sur une face de la glace (1) et est constituée d'une série de corps (4) en relief.

3. Glace suivant la revendication 2, caractérisée en ce que les corps (4) en relief fixés par cuisson sont ponctuels ou en forme de bandes.

4. Glace suivant les revendications 1 à 3, caractérisée en ce que les corps (4) fixés par cuisson ont une hauteur pouvant atteindre 0.5 mm.

5. Glace suivant l'une quelconque des revendications 1 à 4, caractérisée en ce que la couche de revêtement ou les corps (4) en relief sont appliqués par sérigraphie sur la glace et, dans le cas, de glaces cintrées et/ou trempées, sont fixés par cuisson au cours du processus de chauffage nécessaire pour l'opération de cintrage et/ou de trempe.

6. Utilisation d'une glace suivant l'une quelconque des revendications 1 à 5 en tant que glace latérale pouvant être abaissée pour des véhicules automobiles.

## Claims

1. A pane or the like of glass, having a firmly adhering coating layer on an edge zone thereof for the purpose of fixing a U-like metal section on said edge zone with a strip, running along the said zone, of soft elastic material therebetween, said coating layer having a rougher surface than the surface of the glass, characterized in that the coating layer is made up of a ceramic enamel put on by firing at a raised temperature.

2. The pane as claimed in claim 1 characterized in that the coating layer of ceramic fired enamel is placed on one side of the glass pane (1) and is made up of a system of bodies (4) placed on top of the glass surface and proud thereof.

3. The pane as claimed in claim 2 characterized in that the fired-one bodies (4) are in the form of dots or strips.

4. The pane as claimed in any one of claims 1 to 3 characterized in that the fired on ceramic bodies (4) have a height of up to 0.5 mm.

5. The pane as claimed in any one of claims 1 to 4 characterized in that the coating layer or the bodies (4) proud of the glass surface are screen printed onto the glass pane and firing thereof takes place while the glass pane is in a bent condition and/or is pre-stressed as part of the heating up stage in the bending and/or pre-stressing operation.

6. The use of a pane as claimed in any one of claims 1 to 5 as a wind-down side window for motor vehicles.

1/1

Fig. 1

Fig. 2